# EUROPEAN PATENT APPLICATION

(11) **EP 4 614 481 A1**
(43) Date of publication of application: **10.09.2025**
(21) Application number: 25162043.1
(22) Date of filing: 06.03.2025
(51) Int. Cl.: G09B 7/02, G09B 7/04

(54) **LEARNING ASSISTANCE DEVICE, LEARNING ASSISTANCE METHOD, AND LEARNING ASSISTANCE PROGRAM**

(30) Priority: 07.03.2024 JP 2024035078
(71) Applicant: OMRON Corporation, Kyoto 600-8530 (JP)
(72) Inventor: AKINO, Yusuke, Terado-cho, Muko-shi, Kyoto, 617-0002 (JP); OTA, Hirofumi, Terado-cho, Muko-shi, Kyoto, 617-0002 (JP); ARAKI, Sakuya, Terado-cho, Muko-shi, Kyoto, 617-0002 (JP)
(74) Representative: Conti, Marco

(57) **Abstract**

A learning assistance device 10 is a device that is applied to a system in which a user operates an information processing terminal to input answers to questions, and comprises an answer log reception unit 11, a scoring unit 12, an operation history information acquisition unit 13, and an understanding level estimation unit 14. The answer log reception unit 11 acquires answers to questions. The scoring unit 12 performs scoring on the basis of the answers acquired by the answer log reception unit 11. The operation history information acquisition unit 13 acquires history information about operations inputted by the user to the information processing terminal when answering the questions. The understanding level estimation unit 14 estimates the user's level of understanding for each question that has been scored as correct by the scoring unit 12, on the basis of the scoring results for the user's answer to each question and the user's operation history information acquired by the operation history information acquisition unit 13.

## Description

### Technical Field

The present invention relates to a learning assistance device, a learning assistance method, and a learning assistance program that are used in educational settings, qualification examinations, and so forth.

### Description of the Related Art

Personal computers (PCs), tablet terminals, smartphones, and the like are now used for learning and at examination sites.

For example, there is something called computer-based testing (CBT), in which the knowledge and academic ability (level of understanding) of a test taker is evaluated on the basis of the scoring result of a test in which the test taker operates an information processing terminal to answer questions. With CBT, test questions are displayed on the display screen of an information processing terminal operated by the test taker. The test taker enters his answer to the test question displayed on the display screen of the information processing terminal into the answer field for that question. The test taker's level of understanding is estimated on the basis of the result of scoring the test taker's answers.

For example, Patent Literature 1 discloses a learning assistance device that estimates the level of understanding of each test taker not only from the test scoring result, but also from how long it takes to answer questions, the order in which questions were answered, and other such information.

### CITATION LIST

### PATENT LITERATURE

Patent Literature 1: JP-A 2019-152782

### DISCLOSURE OF INVENTION

### TECHNICAL PROBLEM

However, the following problem is encountered with the above-mentioned conventional learning assistance device.

In other words, with the learning assistance device disclosed in the above publication, the number of problems encountered when answering questions is counted on the basis of changes in the answer input speed (number of keystrokes per unit time), and this count is used to estimate the user's level of understanding.

Nevertheless, with a learning assistance device such as this, it is not possible to fully analyze the user's hesitation from just the input speed when answering, and there is the risk that effective learning assistance may not be sufficiently provided to each individual user.

In particular, in estimating the user's level of understanding, only an estimate is made of the level of understanding for incorrect answers, and therefore even if the answer is correct, it is not possible to estimate whether the user has reached a sufficient level of understanding.

It is an object of the present invention to provide a learning assistance device, learning assistance method, and learning assistance program with which learning assistance can be provided to each individual user more effectively than in the past. This aim is achieved by the learning assistance device, the learning assistance method, and the learning assistance program according to the corresponding appended claims.

### TECHNICAL SOLUTION

The learning assistance device according to the first invention is a learning assistance device applied to a system in which a user operates an information processing terminal to input answers to questions, and includes an answer acquisition unit, a scoring unit, an operation history information acquisition unit, and an understanding level estimation unit. The answer acquisition unit acquires answers to questions. The scoring unit performs scoring on the basis of the answers acquired by the answer acquisition unit. The operation history information acquisition unit acquires history information about operations inputted by the user to the information processing terminal when answering the questions. The understanding level estimation unit estimates the user's level of understanding for each question scored as correct by the scoring unit, on the basis of the user's operation history information acquired by the operation history information acquisition unit.

Here, in an educational setting, an entrance exam, or a qualification test, for example, answers entered by users are scored using information processing terminals such as tablet devices, smartphones, and PCs (personal computers), and for questions that are scored as correct, operation history information leading up to the final answer is obtained to estimate each user's level of understanding.

Here, the questions displayed on the information processing terminal may be questions that can be answered by inputting text, or questions that can be answered by selecting an option.

The operation history information includes, for example, writing history information including changes made in the writing of the answer, information about how long it took to write an answer, and so forth.

Consequently, even if the final answer is correct but the user was unsure about the answer and simply hit on the correct answer by chance, it can be estimated whether the user's level of understanding is sufficient or insufficient by making an inference about the uncertainty of the answer on the basis of the operation history information.

As a result, it is possible to provide more effective learning assistance tailored to each individual user than in the past by providing the proper advice even for questions for which the answer was correct, for example.

The learning assistance device according to the second invention is the learning assistance device according to the first invention, wherein the understanding level estimation unit estimates the user's level of understanding of a question according to changes in the answer content included in the operation history information acquired by the operation history information acquisition unit.

Consequently, when the user gives a final answer while hesitating about the answer, the changes in the answer content can be used as a reference to infer uncertainty in the users answer, and the user's level of understanding can be estimated.

The learning assistance device according to the third invention is the learning assistance device according to the first or second invention, wherein the understanding level estimation unit estimates the user's level of understanding of a question according to how long it took to answer, which is included in the operation history information acquired by the operation history information acquisition unit.

Here, how long it took to answer may be recorded as the length of time from when the user selects the question and it is displayed until when the user inputs the answer, for example, or it may be recorded as the length of time until the cursor on the display screen moves within the range of the question.

Consequently, when the user gives a final answer while hesitating about the answer, the time it took to give the answer can be used as a reference to infer the uncertainty of the user when giving the answer, and to estimate the user's level of understanding.

The learning assistance device of the fourth invention is the learning assistance device of the first or second invention, further including an advice generation unit that generates advice to be used in providing learning assistance to the user on the basis of the changes in the user's answer content included in the operation history information acquired by the operation history information acquisition unit, and the level of understanding for each question estimated by the understanding level estimation unit.

Consequently, the proper advice according to the level of understanding can be generated and provided to the user on the basis of the result of the above-mentioned understanding level estimation.

The learning assistance device according to the fifth invention is the learning assistance device according to the first or second invention, wherein the understanding level estimation unit sets the estimation result of the understanding level for each question in stages.

Consequently, the changes in the answer content of the user, how long it to answer, and so forth can be used as a reference to set the user's level of understanding in stages, such as (a) answered correctly without hesitation, (b) answered correctly with some hesitation, (c) answered incorrectly after hesitating about the correct answer, and (d) answered incorrectly without hesitation, for example.

The learning assistance device according to the sixth invention is the learning assistance device according to the fourth invention, wherein the understanding estimation unit sets the estimation result of the understanding level for each question in stages, and the advice generation unit generates advice corresponding to the estimation result set in stages.

Consequently, the advice is generated that corresponds to the user's level of understanding, which is set in stages, such as (a) answered correctly without hesitation, (b) answered correctly with some hesitation, (c) answered incorrectly after hesitating about the correct answer, and (d) answered incorrectly without hesitation, etc., which makes it possible to provide the proper advice according to the user's level of understanding.

The learning assistance device according to the seventh invention is the learning assistance device according to the first or second invention, wherein the operation history information includes input information from an input device for inputting text and symbols into a text box on a browser.

Consequently, the user's uncertainty when answering can be inferred, and the user's level of understanding of the correct answer estimated, by using input information about characters and symbols entered into the text box as operation history information.

The learning assistance device according to the eighth invention is the learning assistance device according to the first or second invention, wherein the operation history information includes operation information from an operating device that moves a cursor displayed on a display screen of an information processing terminal.

Consequently, the user's uncertainty when answering can be inferred, and the user's level of understanding of the correct answer estimated, by using operation information for moving a cursor on a display screen as operation history information.

The learning assistance device according to the ninth invention is the learning assistance device according to the first or second invention, wherein the operation history information includes an answer that has been inputted a plurality of times for a single question.

Consequently, the user's uncertainty when answering can be inferred, and the user's level of understanding of the correct answer estimated, by using details about answers entered a plurality of times before the final correct answer was entered, as operation history information.

The learning assistance device according to the tenth invention is the learning assistance device according to the first or second invention, further including a storage unit that stores operation history information for each question.

Consequently, because a storage unit is provided that stores operation history information for each question entered by the user, the user's level of understanding of the correct answer can be estimated by extracting the operation history information stored in the storage unit.

The learning assistance method according to the eleventh invention is a learning assistance method executed by a learning assistance device applied to a system in which a user operates an information processing terminal to input answers to questions, the method including an answer acquisition step, a scoring step, an operation history information acquisition step, and an understanding level estimation step. In the answer acquisition step, an answer acquisition unit of the learning assistance device acquires an answer to a question. In the scoring step, a scoring unit of the learning assistance device performs scoring on the basis of the answer acquired by the answer acquisition unit. In the operation history information acquisition step, an operation history information acquisition unit of the learning assistance device acquires history information about operations inputted by the user to the information processing terminal when answering a question. In the understanding level estimation step, an understanding level estimation unit of the learning assistance device estimates the user's level of understanding for each question scored as correct by the scoring unit on the basis of the user's operation history information acquired by the operation history information acquisition unit.
According to the present description, the learning assistance method comprises a storing step in which a storing unit of the learning assistance device stores the operation history information for each question.
According to the present description, the learning assistance method comprises an advice generation step in which an advice generation unit of the learning assistance device generates advice used for providing learning assistance to the user on the basis of any changes in a content of the answers by the user included in the operation history information acquired by the operation history information acquisition unit, and the level of understanding of each question estimated by the understanding level estimation unit.
According to the present description, the learning assistance method comprises a step of setting an estimation result for the understanding level for each question in stages by the understanding level estimation unit.
According to the present description, the learning assistance method comprises a step of generating advice corresponding to the estimation results set in stages by the advice generation unit.

Here, for example, in an educational setting, an entrance exam, a qualification test, etc., answers entered by users are scored using an information processing terminal such as a tablet device, smartphone, or PC (personal computer), and for questions that are scored as correct, operation history information leading up to the final answer is acquired to estimate each user's level of understanding.

Here, the questions displayed on the information processing terminal may be questions that are answered by text input, or questions that are answered by selecting an option.

The operation history information includes, for example, writing history information including changes in the writing of an answer, information about how long it took to give an answer, and the like.

Consequently, even if the final answer is correct but the user was unsure about the answer and simply hit on the correct answer by chance, it can be estimated whether the user's level of understanding is sufficient or insufficient by making an inference about the uncertainty of the answer on the basis of the operation history information.

As a result, it is possible to provide more effective learning assistance tailored to each individual user than in the past by providing the proper advice even for questions for which the answer was correct, for example.

The learning assistance program according to the twelfth invention is a learning assistance program that is installed on a learning assistance device applied to a system in which a user operates an information processing terminal to input answers to questions, and causes a computer to execute a learning assistance method including an answer acquisition step, a scoring step, an operation history information acquisition step, and an understanding level estimation step. In the answer acquisition step, an answer acquisition unit of the learning assistance device acquires the answer to the question. In the scoring step, a scoring unit of the learning assistance device scores the answer on the basis of the answer acquired by the answer acquisition unit. In the operation history information acquisition step, an operation history information acquisition unit of the learning assistance device acquires operation history information about an operation inputted by the user to the information processing terminal when answering the question. In the understanding level estimation step, an understanding level estimation unit of the learning assistance device estimates the user's level of understanding for each question scored as correct by the scoring unit on the basis of the user's operation history information acquired by the operation history information acquisition unit.

Here, in an educational setting, an entrance exam, or a qualification test, for example, answers entered by users are scored using information processing terminals such as tablet devices, smartphones, and PCs (personal computers), and for questions that are scored as correct, operation history information leading up to the final answer is obtained to estimate each user's level of understanding.

Here, the questions displayed on the information processing terminal may be questions that can be answered by inputting text, or questions that can be answered by selecting an option.

The operation history information includes, for example, writing history information including changes made in the writing of the answer, information about how long it took to write an answer, and so forth.

Consequently, even if the final answer is correct but the user was unsure about the answer and simply hit on the correct answer by chance, it can be estimated whether the user's level of understanding is sufficient or insufficient by making an inference about the uncertainty of the answer on the basis of the operation history information.

As a result, it is possible to provide more effective learning assistance tailored to each individual user than in the past by providing the proper advice even for questions for which the answer was correct, for example.

It is also an object of the present invention a learning assistance program that is installed in a learning assistance device applied to a system in which a user operates an information processing terminal to input answers to questions, the learning assistance program causing a computer to execute a learning assistance method according to one or more of the features and the steps reported in the present document.
In particular, the learning assistance program can be installed in a learning assistance device according to one or more of the features reported in the present document.

### ADVANTAGEOUS EFFECTS

With the learning assistance device of the present invention, more effective learning assistance can be tailored to each individual user than in the past.

### BRIEF DESCRIPTION OF DRAWINGS

Fig. 1 is a schematic diagram of the configuration of a learning assistance system including a server device including the learning assistance device according to an embodiment of the present invention, and a plurality of tablet terminals connected via the Internet;
Fig. 2 is a block diagram of a configuration of a server device including the learning assistance device in Fig. 1;
Fig. 3 is a block diagram of the configuration of the tablet terminal in Fig. 1;
Fig. 4 is a diagram showing an example (question) of a display screen on the tablet terminal in Fig. 3;
Fig. 5 is a diagram showing an example (understanding level A) of a display screen on the tablet terminal in Fig. 3;
Fig. 6 is a diagram showing an example (understanding level B) of a display screen on the tablet terminal in Fig. 3;
Fig. 7 is a diagram showing an example (understanding level C) of a display screen on the tablet terminal in Fig. 3;
Fig. 8 is a flowchart showing the flow of processing in a learning assistance method on the tablet terminal side in Fig. 1;
Fig. 9 is a flowchart showing the flow of processing in a learning assistance method on the server device (learning assistance device) side in Fig. 1; and
Fig. 10 is a flowchart showing the flow of processing in understanding level estimation in the learning assistance method with the learning assistance device in Fig. 1.

### BEST MODE FOR CARRYING OUT THE INVENTION

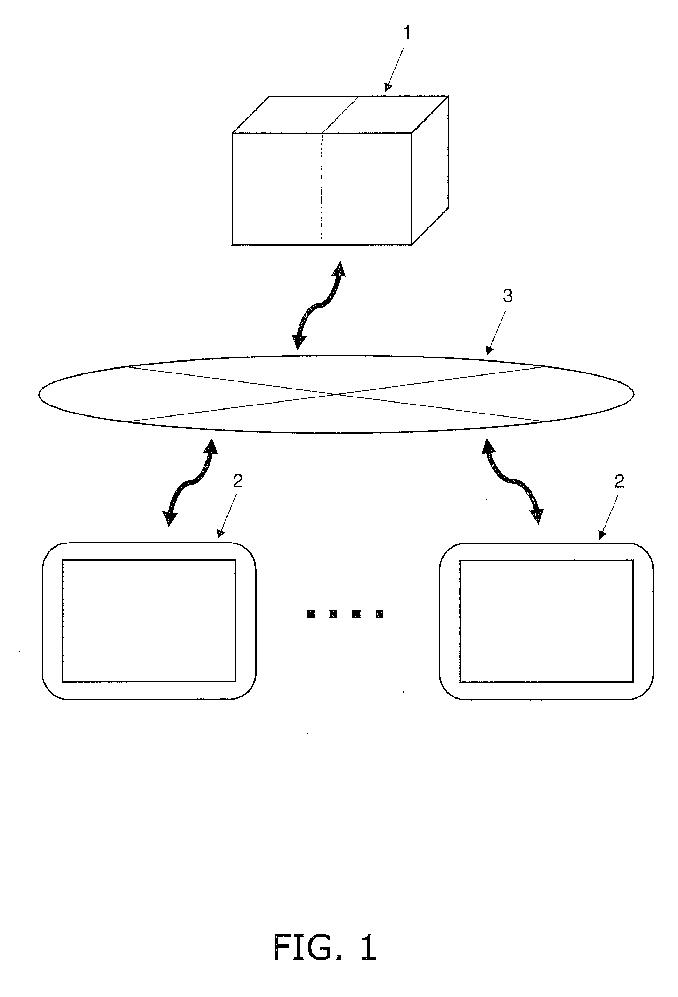

A learning assistance device according to an embodiment of the present invention will now be described with reference to Figs. 1 to 10.

In this embodiment, some unnecessarily detailed description may be omitted. For example, detailed description of already known facts or redundant description of components that are substantially the same may be omitted. This is to avoid unnecessary repetition in the following description, and facilitate an understanding on the part of a person skilled in the art.

The applicant has provided the appended drawings and the following description so that a person skilled in the art might fully understand this disclosure, but does not intend for these to limit what is discussed in the patent claims.

### (1) Configuration of Learning Assistance System Including Learning Assistance Device 10

The learning assistance device 10 according to this embodiment is included in a server device 1 that constitutes a network system for carrying out tests by the computer-based training (CBT) method shown in Fig. 1, in an educational setting, an entrance exam, a qualification exam, etc., for example.

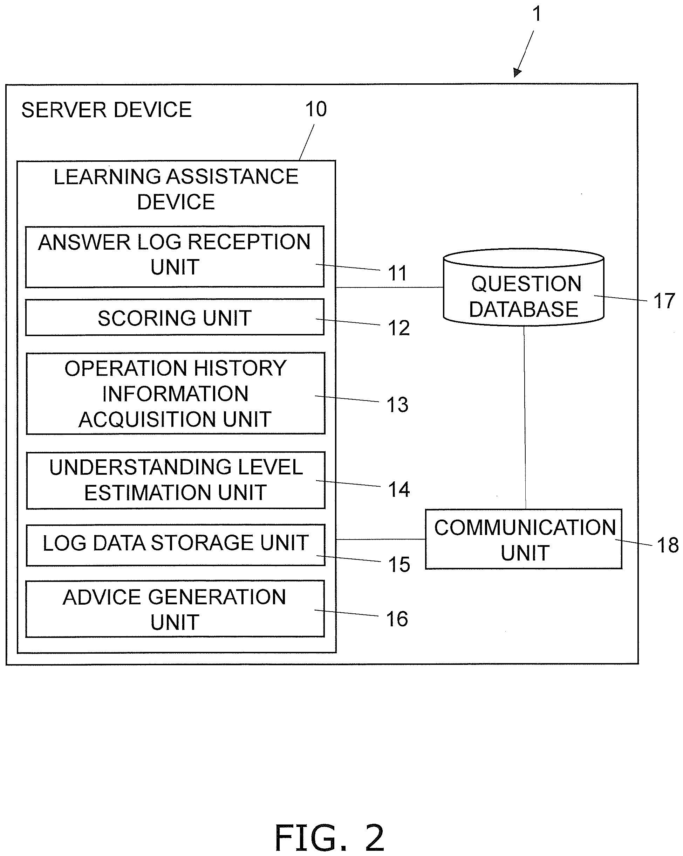

The server device 1 is connected to a plurality of tablet terminals 2 connected via the Internet 3. As shown in Fig. 2, the server device 1 includes a learning assistance device 10, a question database (DB) 17, and a communication unit 18.

The learning assistance device 10 scores answers inputted by a user using a tablet terminal 2, such as a tablet terminal or a smartphone. The detailed configuration of the learning assistance device 10 will be described below.

The question database 17 stores question data, as well as the correct answer (model answer) and standard answer time for each question, in an associated state. Information about questions, correct answers, standard answer times, and so on stored in the question database 17 is transmitted through the communication unit 18 and the Internet 3 to the tablet terminals 2.

The communication unit 18 transmits questions and other such information to the tablet terminals 2 over the Internet 3, and receives information such as the content of the answer for each question, operation history information at the time of answering, and answering duration from the tablet terminals 2 over the Internet 3.

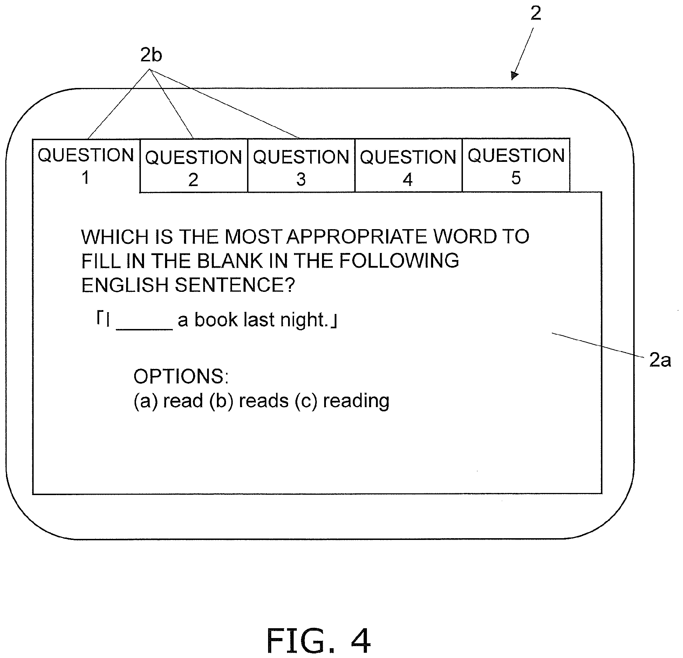

For example, in an educational setting, a tablet terminal 2 is provided to each student, questions are displayed on a display screen 2a (see Fig. 4, etc.), and the students input their answers to the displayed questions. The tablet terminals 2 also display test questions distributed from the server device 1 over the Internet 3 on the display screen.

The currently selected question is displayed on the display screen 2a of the tablet terminal 2. For example, when question 1 is selected on the tablet terminal 2, question 1 is displayed on the display screen 2a of the tablet terminal 2. When question 2 is selected on the tablet terminal 2, question 2 is displayed on the display screen 2a of the tablet terminal 2.

The tablet terminal 2 switches the question displayed on the display screen 2a in response to an operation on the selection tab 2b displayed on the display screen 2a. In other words, the user operates the selection tab 2b to display the desired question (such as questions 1 to 5) on the display screen 2a of the tablet terminal 2.

The tablet terminal 2 generates a history of the user's input operations (character input, cursor operation, etc.) during the test period (the period from the start to the end of the test) as operation history information, for example.

The operation history information is the product of accumulating input operation information during the test, and includes, for example, input information from an input device that inputs characters and symbols into a text box on a browser, and operation information from an operation device that moves a cursor displayed on the display screen 2a of the tablet terminal 2. The operation history information also includes input information about answers that have been inputted a plurality of times for a single question.

Once the test period comes to an end, the tablet device 2 transmits to the server device 1 the answers to the questions (the character strings inputted into the answer box for each question upon completion of the test) and the operation history information generated during the test period.

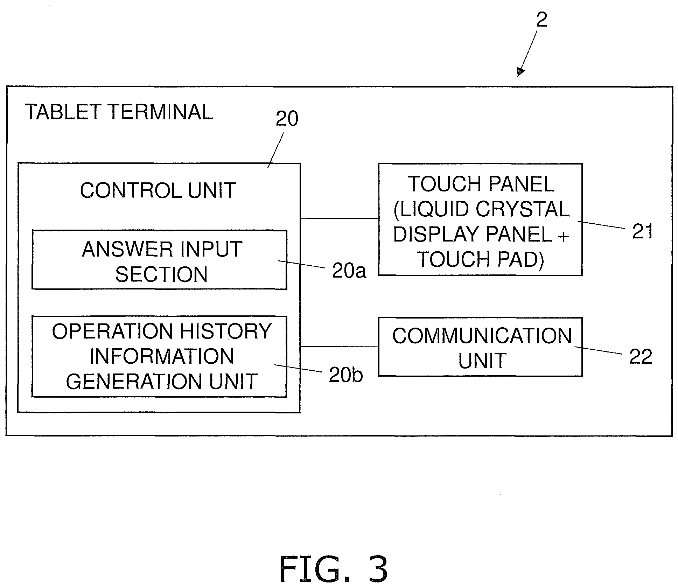

As shown in Fig. 3, the tablet terminal 2 includes a control unit 20, a touch panel (input device) 21, and a communication unit 22.

The control unit 20 controls the operation of each unit of the main body of the tablet terminal 2, and has an answer acquisition unit 20a and an operation history information generation unit 20b.

Upon completion of a test, for example, the answer acquisition unit 20a acquires a character string inputted in an answer box of a question as the user's answer information for that question.

The operation history information generation unit 20b generates operation history information that is the product of accumulating operation information about input operations performed by the user on the touch panel 21. The operation information includes an operation code that identifies the input operation by the user, and the operation time when the user performed the input operation. The input operations performed by the user include an operation of inputting characters into an answer box for a question, an operation of deleting characters inputted into an answer field, an operation of moving a cursor displayed on the display screen 2a of the tablet terminal 2, an operation of selecting a question displayed on the display screen 2a, and the like.

The touch panel (input device) 21 displays test questions distributed from the server device 1, displays answers to questions entered by the user, etc. Also, answers are inputted by the user on the touch panel 21 using a touch pen, a finger, or the like.

The communication unit 22 is provided to each tablet terminal 2 and performs data communication with the server device 1 over the Internet 3.

### (2) Configuration of Learning Assistance Device 10

The learning assistance device 10 in this embodiment is provided in the server device 1, as shown in Fig. 2, and receives and scores the users' answers to each question, the changes leading up to the answer, the answering duration, etc., inputted into the tablet terminals 2, and also estimates the users' level of understanding for each question.

More precisely, as shown in Fig. 2, the learning assistance device 10 includes an answer log reception unit (answer acquisition unit) 11, a scoring unit 12, an operation history information acquisition unit 13, an understanding level estimation unit 14, a log data storage unit (storage unit) 15, and an advice generation unit 16.

The answer log reception unit (answer acquisition unit) 11 acquires, via the communication unit 18 connected to the Internet 3, information about the answers for each question entered by the user into the tablet terminal 2, and the changes in characters, etc., entered up until the final answer is reached.

The scoring unit 12 compares the answers acquired by the answer log reception unit 11 with the correct answer for each question stored in the question database 17 to determine whether the answers are correct or incorrect, and performs scoring.

The operation history information acquisition unit 13 acquires, from the answer log data acquired by the answer log reception unit 11, information about the final answer and any changes leading up to that final answer.

Here, the operation history information is, for example, the product of accumulating input information from an input device that inputs characters, symbols, etc., into a text box on a browser, operation information about a touch panel that moves a cursor displayed on the display screen 2a of the tablet terminal 2, etc.

The understanding level estimation unit 14 estimates the user's level of understanding for each question on the basis of the operation history information acquired by the operation history information acquisition unit 13, not only for questions that were scored as incorrect by the scoring unit 12, but also for questions that were answered correctly.

More specifically, the understanding level estimation unit 14 estimates the user's level of understanding of a question according to the changes in answer content and/or the answer duration, which are included in the operation history information acquired by the operation history information acquisition unit 13.

More precisely, the understanding level estimation unit 14 not only determines the level of understanding to be insufficient for answers to questions that were answered incorrectly (understanding level C), but also makes a step-by-step estimation of answers to questions that were answered correctly as possibly not fully understood (understanding level B) or fully understood (understanding level A), depending on whether the answer was inputted immediately or with some hesitation, on the basis of information such as the changes in the answer at the time of answering and how long it took to answer.

The log data storage unit 15 stores the answer log data (final answer, changes to answer, answer time, etc.) acquired by the answer log reception unit 11.

The answer time stored in the log data storage unit 15 is recorded, for example, as the length of time from when the user selects the question selection tab 2b and the question is displayed on the display screen 2a of the tablet terminal 2 until the user inputs an answer.

The advice generation unit 16 generates advice to be used in providing learning assistance to the user on the basis of any changes to the user's answer content included in the operation history information acquired by the operation history information acquisition unit 13, and the level of understanding for each question estimated by the understanding level estimation unit 14. More precisely, a message including advice related to the direction of future learning, for instance, is generated according to the level of understanding estimated in stages (for example, three levels of understanding A, B, and C), on the basis of the estimation result by the understanding level estimation unit 14, etc. The message generated by the advice generation unit 16 is transmitted through the communication unit 18 to the tablet terminal 2 of each user.

This allows a user who sees the results after taking a test not only to check the scoring results (score) and questions that were answered incorrectly, but also to deepen his level of understanding by checking messages containing useful advice for future study, even for questions that were answered correctly but for which the level of understanding was estimated to be insufficient.

### Display Example according to Questions and Understanding Level Estimation Results

In a learning assistance system including the learning assistance device 10 of this embodiment, English questions are displayed as shown in Fig. 4, for example.

In the example shown in Fig. 4, as question 1, the user is to select the most appropriate word from (a), (b), and (c) to fill in the blank of the English sentence "I a book last night. "

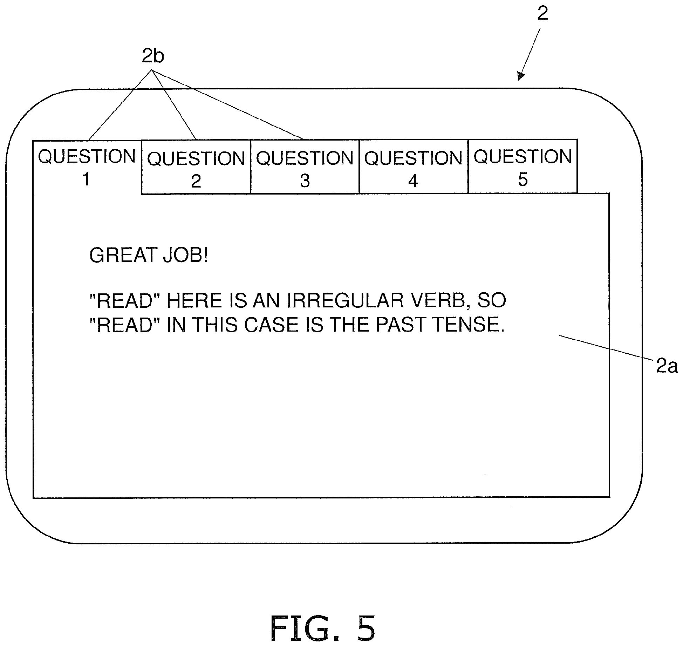

If the operation history information indicates that the user's answer is the correct answer (a) "read" and he entered that without hesitation, the understanding level estimation unit 14 estimates the understanding level to be A, and as shown in Fig. 5, the advice generation unit 16 generates supplementary information such as "In this case, *read* is an irregular verb, so *read* here is in the past tense," along with the message "Great job!," and displays these on the display screen 2a of the tablet terminal 2.

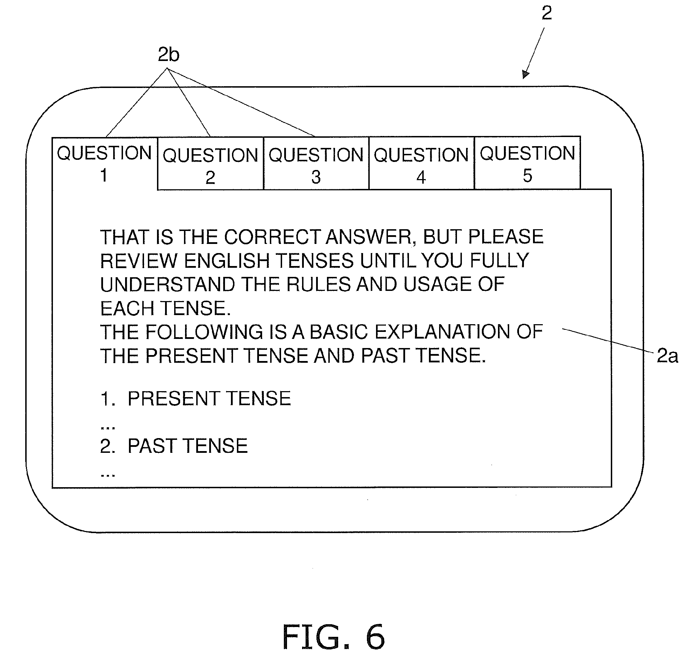

Next, if the operation history information indicates that the user's answer is (a) *read*, which is the correct answer, but he hesitates between this and another answer, or if the answer time is longer than the average standard answer time, the understanding level estimation unit 14 estimates the understanding level to be B since there is a possibility that the final answer is correct but the level of understanding is insufficient, and as shown in Fig. 6, the advice generation unit 16 displays the message "That is the correct answer, but please review English tenses until you fully understand the rules and usage of each tense," and generates supplementary information such as "The following is a basic explanation of the present tense and past tense.
1. Present tense
   ...
2. Past tense
   ..," and displays these on the display screen 2a of the tablet terminal 2.

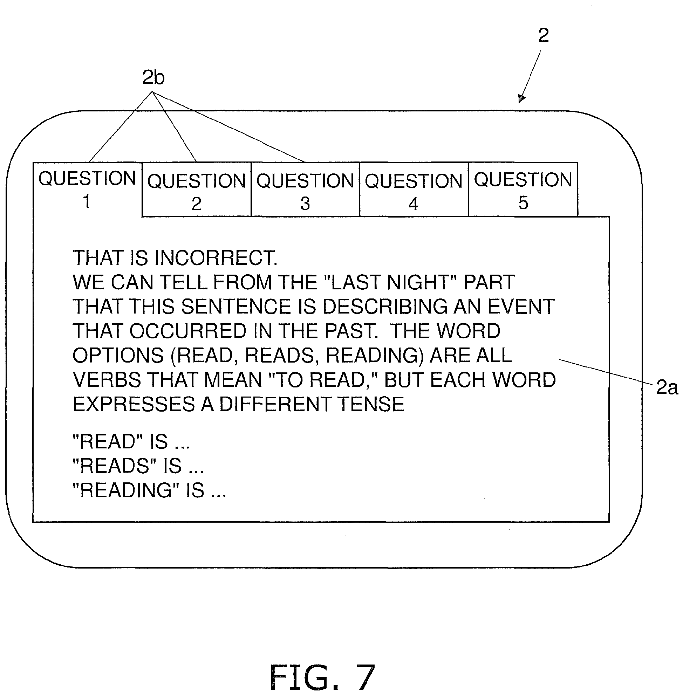

Next, if the operation history information indicates that the user's answer is (b) or (c) (something other than the correct answer (a) *read*), the understanding level estimation unit 14 estimates that the answer is incorrect and the understanding level is insufficient, resulting in an understanding level of C, and as shown in Fig. 7, the advice generation unit 16 generates the message "That is incorrect," generates supplementary information such as "We can tell from the 'last night' part that this sentence is describing an event that occurred in the past.

The word options (*read, reads, reading*) are all verbs that mean "to read," but each word expresses a different tense," and displays these on the display screen 2a of the tablet terminal 2.

### Learning Assistance Method

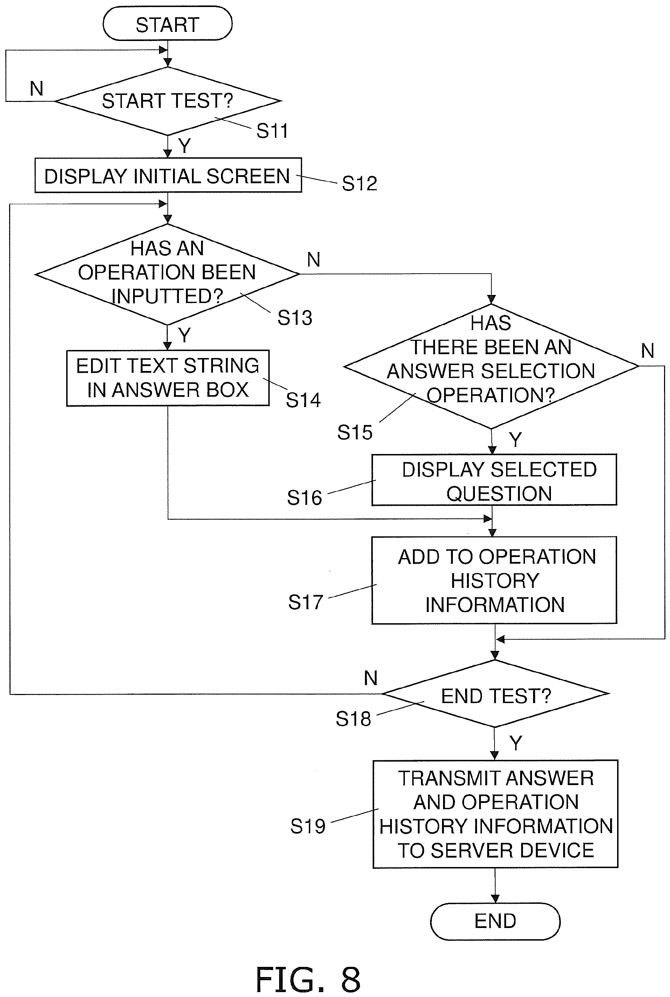

The learning assistance device 10 in this embodiment executes a learning assistance method as shown in the flowcharts of Figs 8 to 10.

The processing in the tablet terminal 2 will now be described with reference to Fig. 8.

As shown in Fig. 8, in step S11, it is determined whether or not a test has been started, and if so, the processing proceeds to step S12.

Next, in step S12, since the test been has started in step S11, an initial screen is displayed on the display screen 2a of each tablet terminal 2. The initial screen may be, for example, a screen that displays question 1, or a screen that displays only the selection tab 2b for selecting a question.

Next, in step S13, it is determined whether or not the user has performed an operation input on the display screen 2a on which the initial screen is displayed. If an operation has been inputted, the processing proceeds to step S14, and otherwise the processing proceeds to step S15.

Next, in step S14, if a character key or a delete key has been operated, the character string in the answer box is edited according to the operated character key.

Next, in step S15, since it was determined in step S13 that no operation was inputted, it is determined whether or not a question selection operation has been performed. If a question selection operation has been performed, the processing proceeds to step S16, but if no question selection operation has been performed, the processing proceeds to step S18.

Next, in step S16, since it was determined in step S15 that a question selection operation had been performed, the question selected by the user is displayed on the display screen 2a of the tablet terminal 2.

Next, in step S17, since text string editing was performed in the answer box in step S14, or since the selected question was displayed on the display screen 2a of the tablet terminal 2 in step S16, operation information including an operation code indicating the content of the user's current input operation, and the time at which this input operation was performed is added to the operation history information.

The tablet terminal 2 stores the operation history information in a memory included in control unit 20. Also, for each question in the test, the tablet terminal 2 stores the text string entered in the answer box for that question in the memory included in the control unit 20.

Next, in step S18 it is determined whether or not the test end time has arrived. If the test end time has arrived, the processing proceeds to step S19, and the processing from step S13 to step S17 is repeated until the test end time is reached.

Next, in step S19, if the test end time has been reached in step S18, the answers to questions and operation history information stored in the memory of the control unit 20 of the tablet terminal 2 are transmitted to the server device 1, and this processing ends.

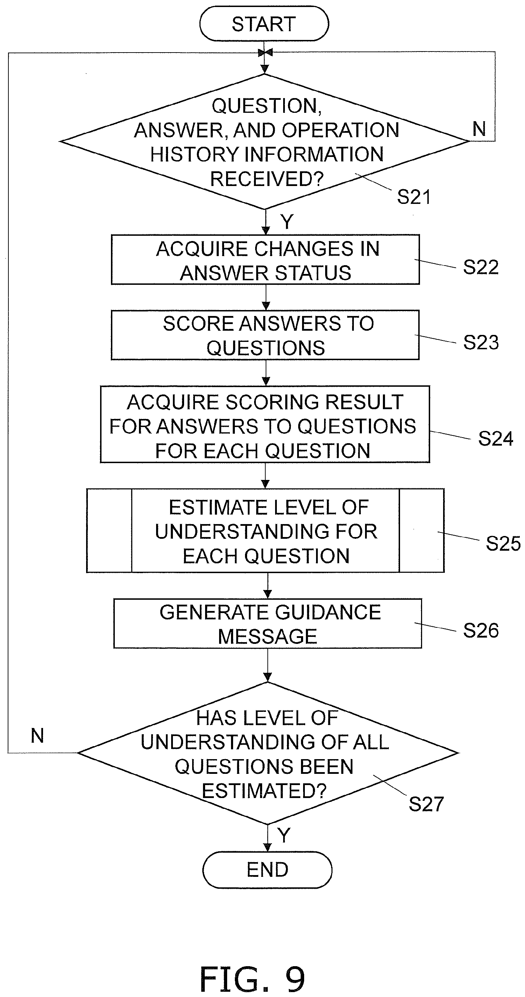

Next, the processing on the server device 1 (learning assistance device 10) side will be described through reference to Fig. 9.

In step S21, the answer log reception unit 11 of the learning assistance device 10 waits until test questions and answers and operation history information for the test time are received from the tablet terminal 2 via the communication unit 18.

Next, in step S22 the operation history information acquisition unit 13 of the learning assistance device 10 acquires information related to changes in the answer status from among the answer log acquired by the answer log reception unit 11.

Here, the information related to changes in the answer status acquired by the operation history information acquisition unit 13 includes, for example, whether or not other answers were entered prior to the final answer, whether the answer time was longer than the average standard answer time, and other such information.

Next, in step S23 the scoring unit 12 of the learning assistance device 10 scores the user's answer for each question in the test.

Next, in step S24 the understanding level estimation unit 14 of the learning assistance device 10 acquires the scoring results for the answers to the questions.

Next, in step S25 the understanding level estimation unit 14 of the learning assistance device 10 estimates, in stepwise fashion, the user's level of understanding for each test question using the scoring results from the scoring unit 12 (step S23) for each question, and any changes to the user's answer content for that question, the answer time, and the standard answer time (step S22).

Next, in step S26 the advice generation unit 16 of the learning assistance device 10 generates a learning assistance message for the user on the basis of the changes in the user's answering status acquired in step S22 and the level of understanding of each question estimated in step S24.

Next, in step S27 it is determined whether or not the level of understanding has been estimated for all questions. If it is determined that the level of understanding has been estimated for all questions, the processing is ended, but if it is determined that there is still a question for which the level of understanding has not been estimated, the processing returns to step S21 and the subsequent processing is repeated.

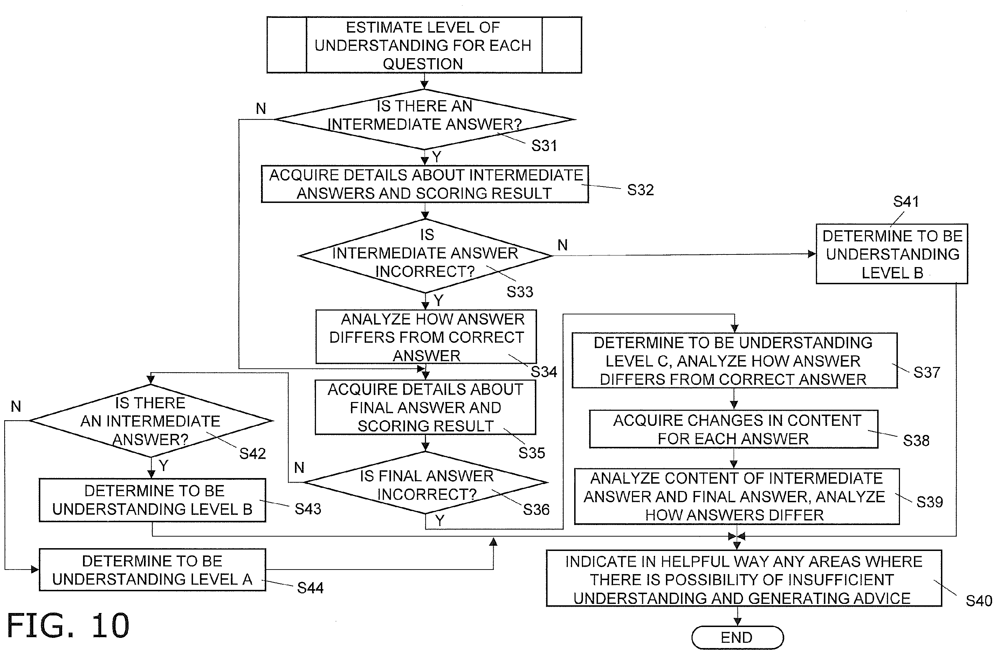

The understanding level estimation processing in step S25 will now be described in detail with reference to Fig. 10.

That is, in step S31 the understanding level estimation unit 14 of the learning assistance device 10 determines whether or not an intermediate answer was entered prior to the final answer, using the operation history information at the time of answering acquired by the operation history information acquisition unit 13. If an intermediate answer has been entered, the processing proceeds to step S32, but if there is only a final answer and no intermediate answer, the processing proceeds to step S35.

Next, in step S32, since it was determined in step S31 that there was an intermediate answer, the understanding level estimation unit 14 acquires the content of the intermediate answer and the result of whether it was correct or incorrect.

Next, in step S33 the understanding level estimation unit 14 determines whether or not an intermediate answer was incorrect. If the intermediate answer was incorrect, the processing proceeds to step S34, but if the intermediate answer was correct, the processing proceeds to step S41.

If there are more than one intermediate answer, the processing from step S32 to step S34 is carried out for each intermediate answer.

Next, in step S34, since it was determined in step S33 that the intermediate answer was incorrect, the understanding level estimation unit 14 analyzes how the intermediate answer differed from the correct answer.

Next, in step S35, under the assumption that there was an intermediate answer and it was incorrect, the understanding level estimation unit 14 acquires the content of the final answer and whether it was correct or incorrect.

Next, in step S36 the understanding level estimation unit 14 determines whether or not the final answer is incorrect. If the final answer is incorrect, the processing proceeds to step S37, but if the final answer is correct, the processing proceeds to step S42.

Next, in step S37, since both the intermediate answers and the final answer were determined to be incorrect in steps S33 and S36, the understanding level estimation unit 14 determines the level of understanding to be C, and analyzes how the final answer differs from the correct answer.

Next, in step S38 the operation history information acquisition unit 13 acquires any changes to the content of each answer (intermediate answers and final answer).

Next, in step S39 the understanding level estimation unit 14 analyzes the content of each answer (intermediate answers and final answer) and how these differed from the correct answer.

Next, in step S40 the advice generation unit 16 indicates in a helpful way any areas where there is a possibility of insufficient understanding, and generates appropriate advice for learning assistance to be displayed on the tablet terminal 2, after which the processing is ended.

On the other hand, in step S41, since it was determined in step S33 that the intermediate answer was correct, and since the correct answer had been entered at one point, the understanding level estimation unit 14 determines the understanding level to be B, and in step S40, advice corresponding to understanding level B to be displayed on the tablet terminal 2 is generated, and the processing is ended.

Next, in step S42, since it was determined in step S36 that the final answer was correct, it is determined whether or not there was an intermediate answer. Here, if the final answer is correct and there was no intermediate answer, the processing proceeds to step S44.

On the other hand, in step S43, since it was determined in steps S36 and S42 that the final answer was correct, but there was an intermediate answer, there is a possibility that the level of understanding was insufficient, leading to an understanding level determination of B, and in step S40 advice corresponding to an understanding level of B (Fig. 6, for example) to be displayed on the tablet terminal 2 is generated, and the processing is ended.

On the other hand, in step S44, if in step S42 the final answer was correct and there was no intermediate answer, it is presumed that the correct answer was entered without any hesitation, so the understanding level estimation unit 14 determines the understanding level to be A, and in step S40 advice corresponding to understanding level A (Fig. 5, for example) to be displayed on the tablet terminal 2 is generated, and the processing is ended.

### Major Features

The learning assistance device 10 of this embodiment is a device applied to a system in which a user operates an information processing terminal to input answers to questions, and includes the answer log reception unit 11, the scoring unit 12, the operation history information acquisition unit 13, and the understanding level estimation unit 14. The answer log reception unit 11 acquires answers to questions. The scoring unit 12 performs scoring on the basis of the answers acquired by the answer log reception unit 11. The operation history information acquisition unit 13 acquires history information of operations inputted by the user to the information processing terminal when answering question. The understanding level estimation unit 14 estimates the user's level of understanding for each question that has been scored as correct by the scoring unit 12, on the basis of the scoring results of the user's answers for the questions and the user's operation history information acquired by the operation history information acquisition unit 13.

Consequently, even if the final answer is correct, but the user was unsure about the answer just happened to hit on the correct answer, whether the user's level of understanding is sufficient or insufficient can be estimated by making an assumption about uncertainty of the answer on the basis of the operation history information.

As a result, learning assistance that is tailored to each individual user and is more effective than in the past can be provided by providing appropriate advice even for questions for which the answers were correct, for example.

### Other Embodiments

An embodiment of the present invention was described above, but the present invention is not limited to or by the above embodiment, and various modifications are possible without departing from the gist of the invention.
(A) In the above embodiment, an example was given in which the present invention was realized as a learning assistance device and a learning assistance method, but the present invention is not limited to this.
   For example, the present invention may be realized as a learning assistance program that causes a computer to execute the above-mentioned learning assistance method.
   This learning assistance program is stored in a memory (storage unit) installed in a learning assistance device, and a CPU reads the learning assistance program stored in the memory and causes the hardware to execute the various steps. More specifically, the CPU reads the learning assistance program and executes the above-mentioned answer acquisition step, scoring step, operation history information acquisition step, and understanding level estimation step, thereby achieving the same effect as above.
   Also, the present invention may be realized as a recording medium on which a learning assistance program is stored.
(B) [0071] In the above embodiment, an example was given in which the server device 1, which was connected to the plurality of tablet terminals 2 via the Internet 3, estimated a user's level of understanding for each question from the content of the answers entered into each tablet terminal 2, the time it took to answer, etc. However, the present invention is not limited to this.
   For example, the estimation of the user's level of understanding may be done by a component provided to each tablet terminal, rather than on the server device side. In other words, the learning assistance device may be provided inside each tablet terminal, rather than to a server device.
(C) [0072] In the above embodiment, an example was given in which the understanding level estimation unit 14 of the learning assistance device 10 estimated the understanding level in stages according to the scoring results for the user's answers, any changes to the answer content, the answer time, etc. However, the present invention is not limited to this.
   For example, the configuration may be such that it is assumed that there is a possibility of insufficient understanding, and a message containing useful advice for the user is generated and displayed on a tablet device or the like only when an answer is correct, but it is estimated that there was some hesitation in answering.
(D) [0073] In the above embodiment, an example was given in which the user's answers to English questions were inputted to the tablet terminal 2. However, the present invention is not limited to this.
   For example, answers to a test or quiz on subjects such as mathematics, science, social studies, or Japanese may be inputted to an information processing device such as a tablet terminal.
(E) [0074] In the above embodiment, an example was given in which the tablet terminal 2 was used as the information processing terminal into which the user inputted answers. However, the present invention is not limited to this.
   For example, the answers to the questions may be inputted to some other information processing terminal such as a PC (personal computer) or a smartphone.

### Additions

The learning assistance device according to the first invention is:
a learning assistance device that is applied to a system in which a user operates an information processing terminal to input answers to questions, the learning assistance device comprising:
an answer acquisition unit that acquires answers to the questions;
a scoring unit that scores the answers acquired by the answer acquisition unit;
an operation history information acquisition unit that acquires history information about operations inputted by the user to the information processing terminal when answering the questions; and
an understanding level estimation unit that estimates the level of understanding of the user for each question scored as correct by the scoring unit, on the basis of the operation history information for the user acquired by the operation history information acquisition unit.

The learning assistance device according to the second invention is the learning assistance device according to the first invention,
wherein the understanding level estimation unit estimates the user's level of understanding of the questions according to any changes in the answer content included in the operation history information acquired by the operation history information acquisition unit.

The learning assistance device according to the third invention is the learning assistance device according to the first or second invention,
wherein the understanding level estimation unit estimates the user's level of understanding of a question according to an answer time included in the operation history information acquired by the operation history information acquisition unit.

The learning assistance device according to the fourth invention is the learning assistance device according to any of the first to third inventions,
further comprising an advice generation unit that generates advice used for providing learning assistance to the user on the basis of any changes in the content of the answers by the user included in the operation history information acquired by the operation history information acquisition unit, and the level of understanding of each question estimated by the understanding level estimation unit.

The learning assistance device according to the fifth invention is the learning assistance device according to any of the first to fourth inventions,
wherein the understanding level estimation unit sets an estimation result for the understanding level for each question in stages.

The learning assistance device according to the sixth invention is the learning assistance device according to the third invention,
wherein the understanding level estimation unit sets an estimation result for the understanding level for each question in stages, and
the advice generation unit generates advice corresponding to the estimation results set in stages.

The learning assistance device according to the seventh invention is the learning assistance device according to any of the first to sixth inventions,
wherein the operation history information includes input information from an input device that inputs characters and symbols into a text box on a browser.

The learning assistance device according to the eighth invention is the learning assistance device according to any of the first to seventh inventions,
wherein the operation history information includes operation information from an operation device that moves a cursor displayed on a display screen of the information processing terminal.

The learning assistance device according to the ninth invention is the learning assistance device according to any of the first to eighth inventions,
wherein the operation history information includes answers that have been inputted multiple times for one of the questions.

The learning assistance device according to the tenth invention is the learning assistance device according to any of the first to ninth inventions,
further comprising a storage unit that stores the operation history information for each question.

The learning assistance method according to the eleventh invention is:
a learning assistance method that is applied to a system in which a user operates an information processing terminal to input answers to questions, and is:
a learning assistance method that is executed by a learning assistance device applied to a system in which a user operates an information processing terminal to input answers to questions, the method comprising:
an answer acquisition step in which an answer acquisition unit of the learning assistance device acquires an answer to the question;
a scoring step in which a scoring unit of the learning assistance device scores the answer on the basis of the answer acquired by the answer acquisition unit;
an operation history information acquisition step in which an operation history information acquisition unit of the learning assistance device acquires history information about operations inputted by the user to the information processing terminal when answering the question; and
an understanding level estimation step in which an understanding level estimation unit of the learning assistance device estimates the user's level of understanding for each question marked as correct by the scoring unit, on the basis of the operation history information for the user acquired by the operation history information acquisition unit.

The learning assistance program according to the twelfth invention is:
a learning assistance program that is installed in a learning assistance device applied to a system in which a user operates an information processing terminal to input answers to questions, the learning assistance program causing a computer to execute a learning assistance method comprising:
an answer acquisition step in which an answer acquisition unit of the learning assistance device acquires an answer to the question;
a scoring step in which a scoring unit of the learning assistance device scores the answer on the basis of the answer acquired by the answer acquisition unit;
an operation history information acquisition step in which an operation history information acquisition unit of the learning assistance device acquires history information about operations inputted by the user to the information processing terminal when answering the question; and
an understanding level estimation step in which an understanding level estimation unit of the learning assistance device estimates the user's level of understanding for each question marked as correct by the scoring unit, on the basis of the operation history information for the user acquired by the operation history information acquisition unit.

### INDUSTRIAL APPLICABILITY

The learning assistance device of the present invention exhibits the effect that is tailored to each individual user and is more effective than in the past can be provided, and is therefore widely applicable to learning assistance in schools, qualification support facilities, and so on.

### EXPLANATION OF REFERENCE

1 server device
2 tablet terminal (information terminal device)
2a display screen
2b selection tab
3 Internet
10 learning assistance device
11 answer log reception unit (answer acquisition unit)
12 scoring unit
13 operation history information acquisition unit
14 understanding level estimation unit
15 log data storage unit (storage unit)
16 advice generation unit
17 question database
18 communication unit
20 control unit
20a answer input section
20b operation history information generation unit
21 touch panel
22 communication unit

## Claims

1. A learning assistance device (10) applied to a system in which a user operates an information processing terminal (2) to input answers to questions, the learning assistance device (10) comprising:
an answer acquisition unit (11) configured to acquire answers to the questions;
a scoring unit (12) configured to score the answers acquired by the answer acquisition unit (11);
an operation history information acquisition unit (13) configured to acquire history information about operations inputted by the user to the information processing terminal (2) when answering the questions; and
an understanding level estimation unit (14) configured to estimate a level of understanding of the user for each question scored as correct by the scoring unit (12), on the basis of the operation history information for the user acquired by the operation history information acquisition unit (13).

2. The learning assistance device (10) according to claim 1,
wherein the understanding level estimation unit (14) estimates the user's level of understanding of the questions according to any changes in an answer content included in the operation history information acquired by the operation history information acquisition unit (13).

3. The learning assistance device (10) according to claim 1 or 2,
wherein the understanding level estimation unit (14) estimates the user's level of understanding of a question according to an answer time included in the operation history information acquired by the operation history information acquisition unit (13).

4. The learning assistance device (10) according to any of claims 1 to 3,
further comprising an advice generation unit (16) configured to generate advice used for providing learning assistance to the user on the basis of any changes in a content of the answers by the user included in the operation history information acquired by the operation history information acquisition unit (13), and the level of understanding of each question estimated by the understanding level estimation unit (14).

5. The learning assistance device (10) according to any of claims 1 to 4,
wherein the understanding level estimation unit (14) sets an estimation result for the understanding level for each question in stages.

6. The learning assistance device (10) according to claim 4,
wherein the understanding level estimation unit (14) sets an estimation result for the understanding level for each question in stages, and
the advice generation unit (16) generates advice corresponding to the estimation results set in stages.

7. The learning assistance device (10) according to any of claims 1 to 6,
wherein the operation history information includes input information from an input device that inputs characters and symbols into a text box on a browser.

8. The learning assistance device (10) according to any of claims 1 to 7,
wherein the operation history information includes operation information from an operation device that moves a cursor displayed on a display screen (2a) of the information processing terminal (2).

9. The learning assistance device (10) according to any of claims 1 to 8.
wherein the operation history information includes answers that have been inputted multiple times for one of the questions.

10. The learning assistance device (10) according to any of claims 1 to 9.
further comprising a storage unit (15) configured to store the operation history information for each question.

11. A learning assistance method that is executed by a learning assistance device (10) applied to a system in which a user operates an information processing terminal (2) to input answers to questions, the learning assistance method comprising:
an answer acquisition step in which an answer acquisition unit (11) of the learning assistance device (10) acquires an answer to the question;
a scoring step in which a scoring unit (12) of the learning assistance device (10) scores the answer on the basis of the answer acquired by the answer acquisition unit (11);
an operation history information acquisition step in which an operation history information acquisition unit (13) of the learning assistance device (10) acquires history information about operations inputted by the user to the information processing terminal (2) when answering the question; and
an understanding level estimation step in which an understanding level estimation unit (14) of the learning assistance device (10) estimates the user's level of understanding for each question marked as correct by the scoring unit (12), on the basis of the operation history information for the user acquired by the operation history information acquisition unit (13).

12. The learning assistance method according to claim 11, comprising a storing step in which a storing unit (15) of the learning assistance device (10) stores the operation history information for each question.

13. The learning assistance method according to claim 11 or 12, comprising an advice generation step in which an advice generation unit (16) of the learning assistance device (10) generates advice used for providing learning assistance to the user on the basis of any changes in a content of the answers by the user included in the operation history information acquired by the operation history information acquisition unit (13), and the level of understanding of each question estimated by the understanding level estimation unit (14).

14. The learning assistance method according to claim 13, comprising:
a step of setting an estimation result for the understanding level for each question in stages by the understanding level estimation unit (14),
a step of generating advice corresponding to the estimation results set in stages by the advice generation unit (16).

15. A learning assistance program that is installed in a learning assistance device (10) applied to a system in which a user operates an information processing terminal (2) to input answers to questions, the learning assistance program causing a computer to execute a learning assistance method comprising:
an answer acquisition step in which an answer acquisition unit (11) of the learning assistance device (10) acquires an answer to the question;
a scoring step in which a scoring unit (12) of the learning assistance device (10) scores the answer on the basis of the answer acquired by the answer acquisition unit (11);
an operation history information acquisition step in which an operation history information acquisition unit (13) of the learning assistance device (10) acquires history information about operations inputted by the user to the information processing terminal (2) when answering the question; and
an understanding level estimation step in which an understanding level estimation unit (14) of the learning assistance device (10) estimates the user's level of understanding for each question marked as correct by the scoring unit (12), on the basis of the operation history information for the user acquired by the operation history information acquisition unit (13).
